# EUROPEAN PATENT APPLICATION

(11) **EP 1 609 433 A1**
(43) Date of publication of application: **28.12.2005**
(21) Application number: 05104961.7
(22) Date of filing: 07.06.2005
(51) Int. Cl.: A61C 1/08, A61C 8/00, A61B 17/17

(54) **Device for determining dynamicallythe orientation of surgical stents on reference templates for preparing implantation sites to be provided in dental, orthopedic and similar surgery**

(30) Priority: 24.06.2004 IT PD20040164
(71) Applicant: LAZZARATO GIANNI, 35020 Due Carrare PD (IT); PICELLO LUCA, 35020 Brugine PD (IT)
(72) Inventor: Lazzarato, Gianni, 1-35020 Due Carrare PD (IT)
(74) Representative: Modiano, Micaela Nadia

(57) **Abstract**

A device (10) for determining dynamically the orientation of surgical stents on reference templates for preparing implantation sites to be provided in dental surgery, orthopedic surgery and the like, comprising spatial orientation means (11), with which it is possible to associate a reference template (12) for preparing implantation sites. The spatial orientation means (11) identify first spatial orientation parameters for the reference template (12). The spatial orientation means (11) are connected, by way of interface means (21), to a computer (22), which comprises a video peripheral (23). An electronic program that identifies on the video peripheral (23) a virtual graphical model (25) of the anatomical structure on which the implantation site is to be provided is associated with the computer (22). The electronic program further identifies on the video peripheral (23) a graphical representation (28a), associated with the virtual graphical model (25), of second spatial orientation parameters (27) of a corresponding implantation site defined by an operator on the virtual graphical model (25). The electronic program correlates dynamically the variation of the second spatial orientation parameters (27) of the corresponding implantation site with the variation of the first spatial orientation parameters of the reference template (12).

## Description

The present invention relates to a device for determining the orientation of surgical stents on reference templates for preparing implantation sites to be provided in dental, orthopedic and similar surgery.

Currently, prosthodontics is becoming increasingly widespread in the field of dentistry, orthopedics and other similar fields.

The term prosthodontics is used substantially to designate the technique that deals with fixing to a bone structure a supporting implant for an additional structural element; in the field of dentistry, said structural element is typically the stump of an artificial tooth, whereas in the orthopedic field said structural element can be for example an artificial prosthesis that provides part of a bone joint.

The way in which implantation sites are provided is fundamental in prosthodontics; said sites must be precise in order to ensure the best possible stability for the implant associated with the implantation site and to avoid damage to the surrounding anatomical structures.

For this reason, in the field of prosthodontics there is a growing use of prosthetically-guided implant placement, which substantially consists in forming a reference template on which surgical stents are prepared which are suitable to guide the surgical burr during the preparation of the implantation sites.

A surgical stent is a guide, typically a bush made of titanium, steel or other suitable material of appropriate and known size, which is intended to guide the surgical burr during the drilling of the bone of the patient in the preparation of the surgical site.

The reference template is a shaped element (in the case of prosthodontics, it is typically a prosthesis with radiopaque teeth mounted in an ideal position) which is used to incorporate the surgical stents once the correct inclination and three-dimensional position has been identified. Said template is built on a model obtained from an impression of the patient.

The reference template must be rested on the corresponding documentary anatomical structure on which the implantation sites are provided (of the type with contact on the mucous membranes in the case of prosthodontics).

Modern techniques for performing instrumental examinations (CT, magnetic resonance imaging) and current computers (provided with appropriate analysis software) allow explorations of the anatomy of the patients that were unthinkable up to a few years ago.

These technologies are currently available to everyone and are becoming increasingly widespread.

In this manner, it becomes possible to perform pre-surgery planning of the implantation procedure in order to achieve the goal of prosthetically-guided implant placement.

Correct planning of surgery in prosthodontics substantially consists of a first visual analysis, obtained by using CT or MRI, a second step for planning the procedure by using the results of the visual analysis, and a third step of actual procedure.

An approach of this type allows to have a result that is already predictable before the procedure.

One thus avoids the risks linked to the procedure and to the final result of the operation and the procedure is further extremely simplified.

Prosthetically-guided implant placement is the fundamental goal of Modem prosthodontics.

With reference to the dental field, the advantages of this method are many.

Biomechanical advantages can include better load distribution, a precisely calculated inclination of the tooth and the bone implant, a reduced risk of mechanical stress for the prosthetic and connection components, and an optimum distribution of the bone volume available around the implants.

There are also aesthetic advantages, which consist in correct sizing of the dental prostheses, and hygiene-related advantages.

Correct interdental spaces are in fact provided in this manner: the patient is thus facilitated in oral hygiene, since there are no regions of stagnation or difficult access that are so dangerous for the health of periimplant tissues.

Other advantages of this technique are of the clinical type: the time required to perform the surgical procedure is reduced, the surgeon is less stressed, since he works confidently without risking incorrect placements of the implant that can lead to traumatic drawbacks for the patient and therefore to subsequent medical and legal problems.

Other technical advantages are linked to the great time-saving that is achieved with this technique and to the corresponding significant cost reduction.

A particular implantation method perfected by the Applicant is described hereafter.

First of all, starting from the impression taken from the patient, a replica model is created (made of plaster or other suitable materials) of the anatomical structure (for example a mandible portion) on which the implantation sites are to be formed, and a reference template to be positioned subsequently on the anatomical structure is created on said replica model.

The reference template, which is an actual prosthesis on which the ideal dental structure is present (obtained with radiopaque test teeth) to be obtained, is applied to the dental arch of the patient.

References are provided on the reference template along said dental arch. These references form a plane on the dental arch of the patient.

A CT scan of the dental arch of the patient is performed while the patient is wearing the reference template; in this CT scan, the references associated with the dental arch are visible.

By means of an appropriate electronic program, the CT scan is imported into a computer.

The processing of the data imported from the CT scan allows to visualize a series of images of the dental arch, including a sectional plan view of the actual extension of the dental arch, a so-called panoramic image of the dental arch, and a whole series of images taken along the extension of the dental arch, substantially at right angles to said extension.

By means of the electronic program, it is possible to set, on each one of these resulting images, the position and theoretical inclination of the implants.

Further, by means of the electronic program it is possible to recreate, starting from the CT scan, a three-dimensional model of the mandible with the gum and teeth.

The previously positioned implants can be visualized in this three-dimensional model.

The electronic program allows to calculate the orientation of each implant positioned on the three-dimensional model.

The orientation of each implant is determined substantially by spatial parameters, such as the angles with respect to a reference system.

The reference system is set by means of the initial references associated with the dental arch of the patient.

The electronic program therefore allows to print these orientation parameters of each implant.

With this printout of the implant orientation parameters, it is therefore possible to arrange the reference template, created on the model obtained from the impression of the patient taken before the CT scan, on a goniometric base.

A goniometric base is substantially a fixture that allows to orient spatially, according to preset orientation parameters, an object that is fixed to said base.

The model created beforehand from the impression of the patient and on which the reference template is also arranged is fixed on the worktop of the goniometric base, taking into account the same reference system as the three-dimensional model of the computer, and the orientation parameters determined for each implant by means of the computer are set on the goniometric base.

For example, the correct angle of the anatomical structure with respect to the reference template is set, with such an orientation that a burr produces on said template a site that is oriented and positioned in the same manner as an implant calculated theoretically on the computer.

In this manner, it is possible to insert a surgical stent in this site (which is substantially a through hole), provided in the reference template.

Said surgical stent is thus oriented and positioned so that once the reference template has been placed in the mouth of the patient the dental surgeon can drill the anatomical structure of the patient (mandibular bone) in the correct position and with the correct angle required to arrange the implant as theorized virtually by means of the computer.

This prosthodontic technique is extremely innovative.

A single perfectible aspect observed in this technique is linked to the step for setting the position and orientation of the implants during the analysis performed with the electronic program on the three-dimensional model of the anatomical structure of the patient.

In this step, the implants are set manually and then the angles and coordinates of said implants are acquired.

These position and orientation data must then be transferred to the goniometric base.

This step is extremely delicate, since maximum care must be placed in not transferring incorrect data.

For this reason, this step is extremely slow and critical.

The aim of the present invention is to provide a device for determining the orientation of surgical stents on reference templates for preparing implantation sites that allows to overcome the critical aspect highlighted in the implantation procedure described above.

Within this aim, an object of the present invention is to provide a device for determining the orientation of surgical stents on reference templates for preparing implantation sites that allows to avoid errors during the transfer of the position and orientation data of the theoretical implants, visualized by means of the computer, to the goniometric base.

Another object of the present invention is to provide a device for determining the orientation of surgical stents on reference templates for preparing implantation sites that reduces work times.

This aim and these and other objects that will become better apparent hereinafter are achieved by a device for determining dynamically the orientation of surgical stents on reference templates for preparing implantation sites to be provided in dental surgery, orthopedic surgery and the like, which comprises:
- spatial orientation means, with which it is possible to associate a reference template for preparing implantation sites, said spatial orientation means identifying first spatial orientation parameters for said reference template,
- a computer, which comprises a video peripheral and an electronic program that identifies on said video peripheral a virtual graphical model of the anatomical structure on which the implantation site is to be provided, said electronic program further identifying on said video peripheral a graphical representation, associated with said virtual graphical model, of second spatial orientation parameters of a corresponding implantation site on said virtual graphical model,
said device being characterized in that it comprises means for interfacing said spatial orientation means with said electronic computer, said electronic program correlating dynamically the variation of said second spatial orientation parameters of said corresponding implantation site with the variation of said first spatial orientation parameters of said reference template.

Further characteristics and advantages of the invention will become better apparent from the following detailed description of a preferred but not exclusive embodiment thereof, illustrated by way of non-limiting example in the accompanying drawings, wherein:
Figure 1 is a schematic view of a device according to the invention;
Figure 2 is a schematic view (obtained by processing a CT scan) of a cross-section, taken in plan view, of a dental arch;
Figure 3 is a schematic view (obtained by processing a CT scan) of a panoramic view, in which the extension of a dental arch is visible;
Figure 4 is a schematic view (obtained by processing a CT scan) of a cross-section taken at right angles to the line of extension of the dental arch;
Figure 5 is a three-dimensional virtual graphical model that can be displayed on the video peripheral that composes the device according to the invention;
Figure 6 is a view of a portion of a reference template on which surgical stents for providing implantation sites are positioned.

With reference to the figures, a device for determining the orientation of surgical stents on reference templates for preparing implantation sites according to the invention is generally designated by the reference numeral 10.

In this example, specific reference is made to prosthodontics; however, the device can be applied to the other fields of surgery mentioned earlier.

The device 10 comprises spatial orientation means 11, on which it is possible to fix a reference template 12, which is associated with the corresponding model 13 of the anatomical structure of the patient (obtained from an impression of the involved arch of the patient) in order to prepare dental implantation sites.

The spatial orientation means 11 are constituted for example by a goniometric base of a per se known type.

Said goniometric base comprises a supporting structure 14 for a supporting worktop 15, on which the anatomical structure model 13 with the reference template 12 is fixed (by way of known means, not shown in the figures); the supporting worktop 15 can be orientated in space by rotation about three perpendicular axes, respectively a vertical axis 16 and two perpendicular axes 17 that form the supporting worktop for the anatomical structure model 13 with the reference template 12.

The rotation of the supporting worktop 15 occurs by virtue of corresponding orientation adjustment means 18 available to an operator, such as for example handwheels kinematically connected to the supporting worktop 15 in a substantially known manner; in particular, a first handwheel 18a, associated with the vertical axis 16, and two separate second handwheels 18b associated with the perpendicular axes 17.

The handwheels 18a and 18b are rigidly coupled to the supporting structure 14.

Indicators 20 for indicating the angular variation of the rotation axes 16 and 17 of the supporting worktop 15 are further provided on the supporting structure 14.

The means 11 for spatial orientation of the reference template are connected, by way of interface means 21, to a computer 22, such as for example an ordinary personal computer, which is associated with a video peripheral 23.

The interface means 21 comprise angular motion sensors 24, which are associated with the rotation axes 16 and 17 of the supporting worktop 15.

The angular motion sensors 24 are constituted for example by corresponding encoder devices.

Other possible equivalent angular motion sensors can be of the optical, mechanical or magnetic type, or of other types.

The angular motion sensors 24 are connected to the computer 22.

The spatial orientation of the reference template 12 (and therefore of the anatomical structure model 13) fixed to the supporting worktop 15 of the goniometric base is identified by first spatial orientation parameters, which can be visualized for example on the indicators 20 for indicating the angular variation of the rotation axes 16 and 17 of the supporting worktop 15.

An electronic program or software is loaded on the computer 22 and displays on the video peripheral 23 a virtual graphical model, in this case a three-dimensional model, of the anatomical structure on which the implantation site for inserting the implant is to be provided.

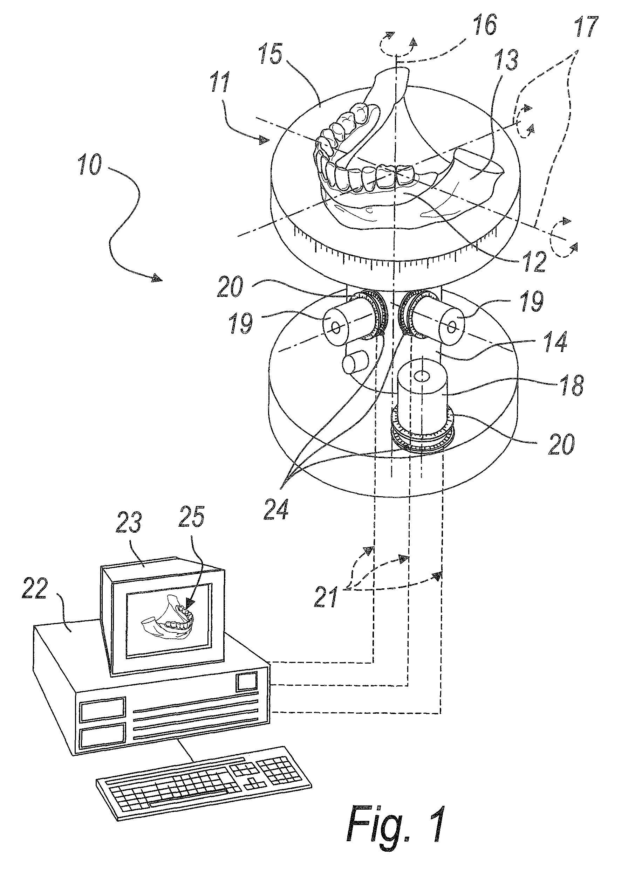

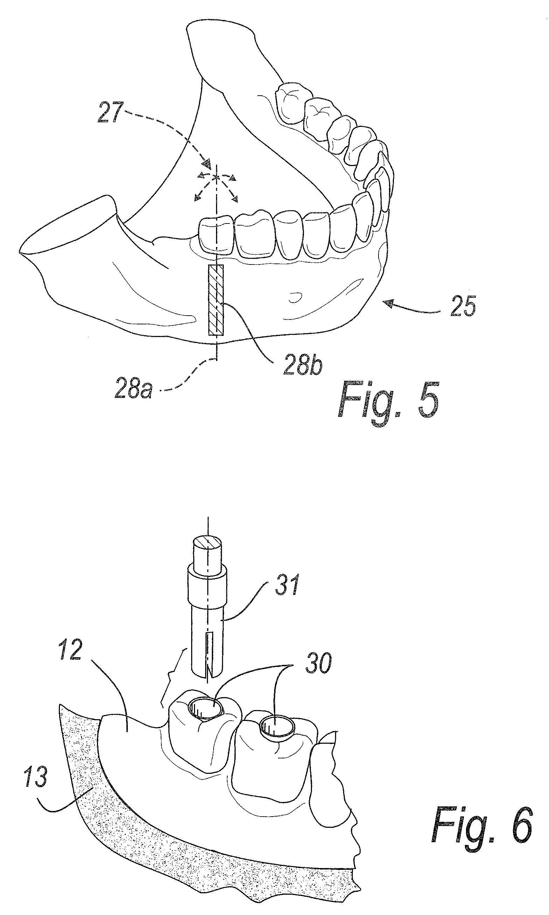

Said virtual graphical model is designated by the reference numeral 25 (see Figures 1 and 5).

The method for reconstructing the virtual graphical model 25 is substantially known and is obtained by processing the data of a CT scan obtained with the method described hereinafter.

First of all, the model 13 of the anatomical structure where the implantation site is to be provided, in the example being considered the mandible of a human patient, is constructed. This is done for example by starting from the cast or impression of the dental arch.

Once this anatomical structure model 13 has been prepared, the reference template 12 to be positioned on the model 13 is prepared.

The reference template 12 is complementary to the model 13 and substantially simulates what will be the dental arch of the patient once the prosthodontic procedure is complete.

Substantially, the reference template 12 is a dental prosthesis, which is designed to be applied to the anatomical structure model 13 (and which will be subsequently positioned in the mouth of the patient in order to drill the bone).

A reference system is positioned on the reference template 12 applied to the anatomical structure model 13.

Said reference system must identify a reference plane, designated by P1, and a direction D1 on said reference plane P1 (as will become better apparent hereinafter).

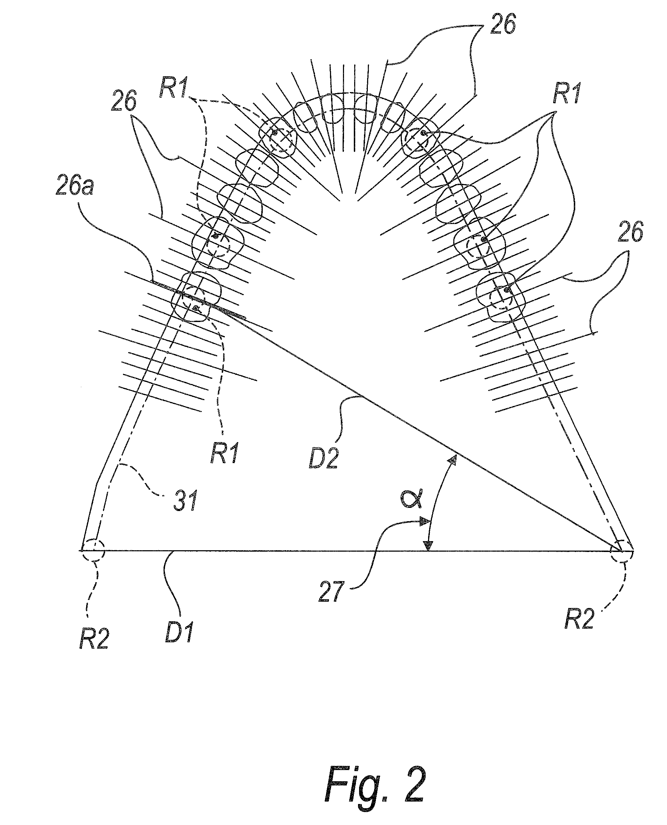

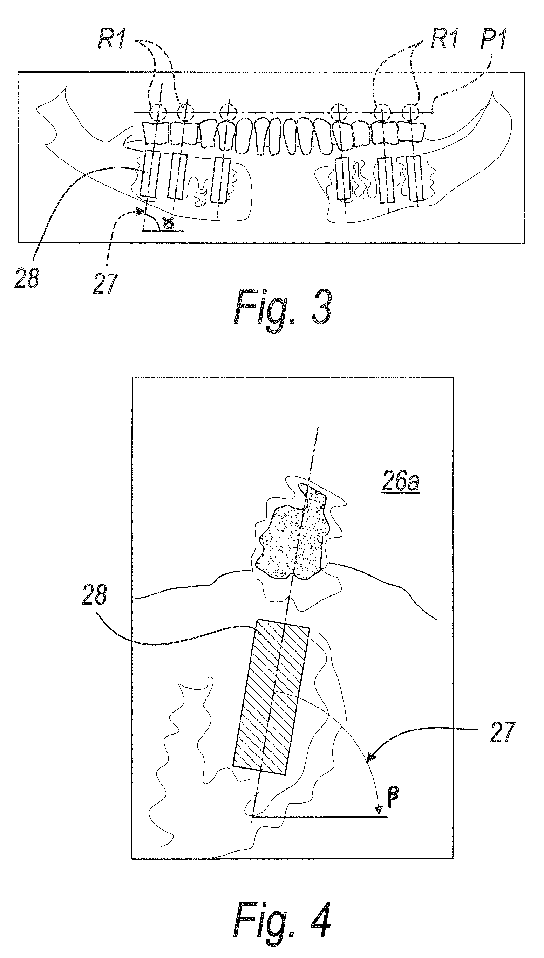

Said reference plane P1 can be provided for example by arranging on the teeth a set of balls, designated by R1, all of which lie on the same plane. The direction D1 is determined by two additional end balls R2, which determine a direction on the plane P1 formed by said balls R1. Reference should be made in this regard to Figures 2 and 3.

At this point, the reference template 12, with the reference system applied thereto, is inserted in the mouth of the patient.

The patient is then subjected to a CT scan or to another technique for scanning the dental arch.

The CT scan (and its subsequent processing) can yield as an output substantially three important types of view.

A first view is constituted by a sectional plan view of the dental arch, as shown schematically in Figure 2.

A second view is constituted by the so-called panoramic view, in which the extension of the dental arch is visible, as shown schematically in Figure 3.

The third view substantially corresponds to a series of cross-sections taken at right angles to the line of extension of the dental arch; Figure 4 shows schematically one of these cross-sections. Said cross-sections are designated by the reference numeral 26 in Figure 2.

The electronic program processes these views from the imported CT scan in a known digital format.

These views can be displayed on the video peripheral 23.

At this point, by using the electronic program, it is possible to position on the screen, with reference to the anatomical structure identified by the views of the CT scan, the hypothetical implants 28, which will be fixed to the anatomical structure at one end and will support a tooth stump at the opposite and.

The spatial orientation of said (virtual) implants and accordingly of the implantation sites that accommodate them is determined by second spatial orientation parameters, generally designated by the reference numeral 27.

Said second spatial orientation parameters 27 can be summarized as three different angles obtained on the views resulting from the processing of the CT scan.

With reference to a specific implant (or a corresponding implantation site), designated by the reference numeral 28, a first one of these second spatial orientation parameters is given by the angle α (see Figure 2) that lies between the reference direction D1 identified (by means of the two balls R2) on the reference plane P1 (shown as a line in Figure 3) provided by means of the balls R1, and the direction D2 formed by a reference point located along the reference direction D1 (for example the center of one of the two balls R2), and the central axis of the cross-section 26a that is perpendicular to the line of extension 31 of the dental arch.

With reference to the same implant 28, a second one of the second spatial orientation parameters 27 is formed by the angle of inclination β of the axis of the implant 28 (or of the corresponding implantation site) formed on the corresponding cross-section 26a of the dental arch, as shown in Figure 4.

With reference to the same implant 28, a third one of the second spatial orientation parameters 27 is defined by the angle γ, formed by the axis of the implant 28 with respect to the reference plane measured on the panoramic view (see Figure 4).

The electronic program, by knowing the views obtained by processing the CT scan with the reference system, is capable of reconstructing the virtual graphical model 25, which in this case is three-dimensional, of the anatomical structure of the patient. The virtual graphical model 25 carries the information of the reference system provided by the balls associated with the reference template during the CT scan and simulates in practice in the mouth of the patient, showing also what will be the future "teeth" formed by the integrated prostheses (radiopaque test teeth) in said reference template (see Figure 5).

This reconstruction of the virtual graphical model 25, which is three-dimensional, is visible on the video peripheral 23.

Advantageously, by knowing the second spatial orientation parameters 27 of the implant 28 (and accordingly of the corresponding implantation site), determined earlier by the analysis of the CT scan, the electronic program is capable of recreating and visualizing on the three-dimensional virtual graphical model 25 also the orientation of the virtual implantation site (by visualizing its axis 28a) and of the corresponding virtual model of the implant 28b (or implants) to be implanted in the patient.

This virtual model of the implant 28b (and therefore also the axis 28a of the corresponding virtual implantation site) is arranged and orientated on the three-dimensional virtual graphical model 25 by the dental surgeon (by means of operations for interacting with the electronic program) so as to optimize the bone and tissue spaces identified by the three-dimensional virtual graphical model 25 (which match bone and tissue spaces identified by the CT scan).

The device 10 allows to correlate the second spatial orientation parameters 27, therefore the orientation of the virtual models of the implants 28b hypothesized on the screen (and therefore of the corresponding implantation sites 28a) with the first spatial orientation parameters of the reference template 12 identified by the goniometric base interfaced with the computer 22.

In practice, a variation of the first spatial orientation parameters, performed for example by moving the supporting worktop 15 of the reference template 12 by acting on the movement handwheels 18 and 19, produces on the screen a corresponding variation of the second spatial orientation parameters 28 and therefore of the orientation of the implants 28b (and of the corresponding implantation sites 28a).

Surgical guiding stents 30 for systems for drilling the bone below the template 12, as shown in Figure 6, must be arranged on the reference template 12. Said figure also illustrates the tip of the positioning element 31 of the stents 30 once the sites have been drilled on the reference template.

The surgical stents 30 must therefore be associated with the reference template 12 with the same orientation that the implantation site, provided by drilling guided by the surgical stents 30, will assume.

Advantageously, therefore, with the present device it is possible to determine dynamically the correct orientation that the surgical stents 30 must assume on the reference template 12.

By moving the supporting worktop 15 of the goniometric base, the reference template is in fact moved, consequently varying the orientation of the theoretical implantation site that can be visualized on the video peripheral 23, because the goniometric base is interfaced with the computer 22 by means of angular motion sensors 24.

The orientation of the surgical stent 30 must be the same as the implantation site as simulated on the three-dimensional virtual model.

Then, by orienting the supporting worktop 15 of the template 12 (and therefore the template itself), one can visualize on the video peripheral 23 whether the orientation thus obtained matches the anatomical requirements of the patient (since the result is tested on an accurate virtual model reconstructed from the CT scan of said patient).

More correctly, it is possible to plan dynamically the orientation and position of the implantation sites by moving the supporting worktop of the goniometric base 15 and visualizing on the screen whether the orientation is the optimum one.

When the orientation performed by means of the goniometric base coincides with the theoretical design that can be visualized on the screen, the first spatial orientation parameters that are identified are the correct ones.

At this point, by means of the burr 31, it is possible to provide a through hole in the reference template 12 that will have the intended orientation.

Then the surgical stent 30 is inserted in the resulting hole and is fixed thereto with the aid of a positioning element.

The subsequent provision of the implantation site is obtained by drilling the bone, guided by the surgical stent, after placing the reference template in the mouth of the patient. This site has the orientation of the surgical stent (and therefore of the hole provided in the reference template) and therefore of the implantation project planned on the screen.

In practice it has been found that the invention thus described solves the mentioned problems in determining the orientation of surgical stents on reference templates for preparing implantation sites to be provided in dental surgery, orthopedic surgery and other similar fields of application.

In particular, the present invention provides a device for determining the orientation of surgical stents on reference templates for preparing implantation sites that is dynamic and allows to skip the part of transferring the orientation data obtained by means of the computer to the goniometric base.

This has been achieved substantially by interfacing the goniometric base with a computer and by implementing an electronic program that allows to correlate the spatial orientation variations defined on the goniometric base with the variation of corresponding spatial orientation parameters of implantation sites or of the implants themselves, defined on a three-dimensional virtual graphical model, which can be visualized on the video peripheral of the electronic computer, of the anatomical bone structure of the patient.

It is evident that it is possible to implement an electronic program that also allows to provide the reverse path of correlation between the spatial orientation parameters of the three-dimensional virtual graphical model and the goniometric base.

It is in fact conceivable to associate with the goniometric base motion actuators that are interfaced with the computer.

At this point it is possible to vary the spatial orientation parameters of the three-dimensional model that can be displayed on the screen, for example by moving the corresponding implant associated with the three-dimensional virtual graphical model by means of a mouse and obtain a corresponding variation, by activating said movement actuators, of the spatial orientation parameters of the supporting worktop of the goniometric base.

The invention thus conceived is susceptible of numerous modifications and variations, all of which are within the scope of the inventive concept; all the details may further be replaced with other technically equivalent elements.

In practice, the materials employed, so long as they are compatible with the specific use, as well as the dimensions, may be any according to requirements and to the background art.

The disclosures in Italian Patent Application No. PD2004A000164 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for determining dynamically the orientation of surgical stents on reference templates for preparing implantation sites to be provided in dental surgery, orthopedic surgery and the like, which comprises:
- spatial orientation means (11), with which it is possible to associate a reference template (12) for preparing implantation sites, said spatial orientation means (11) being adapted to identify first spatial orientation parameters for said reference template (12),
- a computer (22), which comprises a video peripheral (23) and an electronic program that identifies on said video peripheral (23) a virtual graphical model (25) of the anatomical structure on which the implantation site is to be provided, said electronic program further identifying on said video peripheral (23) a graphical representation, associated with said virtual graphical model (25), of second spatial orientation parameters (27) of a corresponding implantation site (28a) on said virtual graphical model (25),
said device being **characterized in that** it comprises means (21) for interfacing said spatial orientation means (11) with said electronic computer, said electronic program being adapted to correlate dynamically the variation of said second spatial orientation parameters (27) of said corresponding implantation site (28a) with the variation of said first spatial orientation parameters of said reference template (12).

2. The device according to claim 1, **characterized in that** said spatial orientation means (11) comprise a goniometric base, which is constituted by a supporting structure (14) for a supporting worktop (15) on which said reference template (12) is fixed according to a preset reference system, said supporting worktop (15) being orientable in space along three mutually perpendicular rotation axes (16,17), corresponding means (18) for adjusting the orientation being kinematically connected to said supporting worktop (15) and being available to an operator, said means (21) for interfacing said goniometric base with said electronic computer (22) comprising angular motion sensors (24), which are respectively associated with said three rotation axes (16,17) of said supporting worktop (15).

3. The device according to claim 2, **characterized in that** said angular motion sensors (24) are selectively of the optical, mechanical, magnetic, or electrical type.

4. The device according to claim 3, **characterized in that** said angular motion sensors (24) are constituted by corresponding encoder devices.

5. The device according to claim 4, **characterized in that** said orientation adjustment means (18) available to an operator comprise handwheels (18a, 18b), which are kinematically connected to said supporting worktop (15), indicators (20) for indicating the angular variation of said rotation axes (16, 17) of said supporting worktop (15) being associated with said handwheels (18a, 18b).

6. The device according to one or more of the preceding claims, **characterized in that** said virtual graphical model (25) is of the three-dimensional type, the graphic representation of a corresponding virtual implant (28a) being also associated with said graphical representation of a corresponding virtual implantation site (28a) on said virtual graphical model (25).
